Europäisches Patentamt

European Patent Office

Office européen des brevets

(11) Veröffentlichungsnummer: **0 444 445 A1**

## EUROPÄISCHE PATENTANMELDUNG

(21) Anmeldenummer: 91101595.6

(22) Anmeldetag: 06.02.91

(51) Int. Cl.5: **G01C 19/30**

(30) Priorität: 20.02.90 DE 4005274

(43) Veröffentlichungstag der Anmeldung:
04.09.91 Patentblatt 91/36

(84) Benannte Vertragsstaaten:
**DE FR GB**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Gruber, Josef Peter**
**Erlenweg 7**
**W-7772 Mühlhofen(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**W-5620 Velbert 11 Langenberg(DE)**

(54) Dynamisch abgestimmter Kreisel.

(57) Bei einem elektrisch gefesselten, dynamisch abgestimmten Kreisel weisen die Drehmomenterzeuger (34,36) zwei an dem Kreiselrotor (18) angebrachte, radial sich erstreckende, Ringscheiben (58,60) auf. Die Ringscheiben (58,60) sind axial magnetisiert und bilden zwischen sich einen Luftspalt (66). Die Drehmomenterzeuger (34,36) enthalten weiterhin Flachspulen (68,70;72,74), die radial angeordnet sind und sich teilweise in den Luftspalt (66) erstrecken.

Fig.1

## Technisches Gebiet

Die Erfindung betrifft einen dynamisch abgestimmten Kreisel, enthaltend

(a) einen Antriebsmotor mit einer Motorwelle, die in einem Kreiselgehäuse gelagert ist

(b) einen Kreiselrotor,

(c) eine mit Federgelenken ausgebildete Kardananordnung zur Kopplung des Kreiselrotors mit der Motorwelle, wobei diese Kardananordnung einen Kardanring enthält, dessen dynamische Momente die Rückstellmomente der Federgelenke kompensieren,

(d) Abgriffe, welche auf Auslenkungen des Kreiselrotors um eine erste bzw. eine zweite Eingangsachse ansprechen, wobei diese Eingangsachsen senkrecht zueinander und zu der Achse der Motorwelle verlaufen,

(e) Drehmomenterzeuger, welche um die Eingangsachsen wirksam sind, und

Bei solchen dynamisch abgestimmten Kreiseln wird der Kreiselrotor von der Motorwelle über die Kardananordnung so angetrieben, daß Momente nur um die Drehachse wirksam werden. Die Rückstellmomente der Federgelenke werden durch entgegengesetzt gleiche dynamische Momente des Kardanringes kompensiert. Der Kreiselrotor ist elektrisch an eine Ruhelage gefesselt: Eine Auslenkung aus dieser Ruhelage um eine der Eingangsachsen erzeugt ein Signal an dem zugehörigen Abgriff. Über den Fesselkreis wird dieses Signal auf einen Drehmomenterzeuger geschaltet, der ein Drehmoment auf den Kreiselrotor um die andere Eingangsachse ausübt. Nach den Kreiselgesetzen wirkt dieses Drehmoment der Auslenkung entgegen.

## Zugrundeliegender Stand der Technik

Ein solcher elektrisch gefesselter, dynamisch abgestimmter Kreisel mit zwei zueinander senkrechten Eingangsachsen ist beschrieben in der DE-A1-30 33 281. Dabei ist der Motor in einem Gehäuseteil angeordnet, der von einem den Kreiselrotor enthaltenden Gehäuseteil durch eine Zwischenwand getrennt ist. In der Zwischenwand sitzt eine Lagerung für die Motorwelle. Der Kreiselrotor weist in seiner der Zwischenwand zugewandten Stirnfläche eine Ringnut auf, deren Seitenwände von radial magnetisierten Ringen gebildet werden. In diese Ringnut ragen Paare von diametral gegenüberliegenden, zu einer Zylinderfläche gebogene Flachspulen. Die Flachspulen in Verbindung mit den Ringen bilden die Drehmomenterzeuger. Die Abgriffe werden von Spulen gebildet, die auf der Zwischenwand sitzen und mit der Stirnfläche des Kreiselrotors zusammenwirken. Die Signale der Abgriffe sind über analoge Fesselkreise überkreuz auf die Drehmomenterzeuger geschaltet. Außerdem ist bei der DE-A1 30 33 281 ein differenzierendes Dämpfungsnetzwerk zur Dämpfung von Nutationsschwingungen vorgesehen.

Ähnlich aufgebaute, elektrisch gefesselte, dynamisch abgestimmte Kreisel sind dargestellt und beschrieben in der DE-A1-28 34 379, sowie der DE-B2-24 29 913 und der DE-C-12 81 216.

In der EP-A2-0 251 157 ist eine Trägheitssensoranordnung mit einem elektrisch gefesselten, dynamisch abgestimmten Kreisel beschrieben, bei welcher der Fesselkreis digital arbeitet.

Die DE-C2-32 13 720 zeigt eine dynamisch aufgehängte Kardanaufhängung mit zwei Freiheitsgraden.

## Offenbarung der Erfindung

Der Erfindung liegt die Aufgabe zugrunde, bei einem elektrisch gefesselten, dynamisch abgestimmten Kreisel der eingangs genannten Art die Fertigung zu vereinfachen.

Der Erfindung liegt weiter die Aufgabe zugrunde, mit einer vorgegebenen Rotorbaugröße entweder bei gleicher Spinfrequenz den Drall zu erhöhen oder bei gleichem Drall die Spinfrequenz zu verringern, oder aber bei gleicher Spinfrequenz und gleichem Drall den Kreiselrotor kleiner zu dimensionieren.

Der Erfindung liegt ferner die Aufgabe zugrunde, eine Störung der Abgriffe durch die Spulen der Drehmomenterzeuger zu vermeiden.

Schließlich liegt der Erfindung die Aufgabe zugrunde, die Wärmeabfuhr der von den Spulen der Drehmomenterzeugers erzeugten Verlustleistung zu verbessern.

Erfindungsgemäß werden diese Aufgaben dadurch gelöst, daß

(f) die Drehmomenterzeuger zwei an dem Kreiselrotor angebrachte, radial sich erstreckende, Ringscheiben aufweisen,

(g) die Ringscheiben axial magnetisiert sind,

(h) die Ringscheiben zwischen sich einen Luftspalt bilden, und

(i) die Drehmomenterzeuger weiterhin Flachpulen enthalten, die radial angeordnet sind und sich teilweise in den Luffspalt erstrecken.

Bei einer solchen Ausbildung kann der Kreiselrotor als einfaches Drehteil hergestellt werden. Auch die Spulen des Drehmomenterzeugers können einfacher hergestellt werden, da die gewickelten Flachspulen nicht mehr in Zylinderform gebracht zu werden brauchen.

Durch die axiale Magnetisierungsrichtung wird eine gute Homogenität des Magnetfeldes erreicht. Da der Luftspalt zwischen Kreiselrotor und Flachspule größer bemessen werden kann, ist der Einfluß dieses Luftspaltes auf die Kreiseldriften gegenüber den vorbekannten Konstruktionen vermindert.

Der Kreiselrotor kann bis auf eine schmale Umfangsnut, in welche die Flachspulen des Drehmomenterzeugers hineinragen, massiv ausgebildet werden. Das Trägheitsmoment des Kreiselrotors wird dadurch bei vorgegebenen Außenabmessungen erhöht. Dadurch ist bei gleicher Rotorbaugröße ein höherer Drall errreichbar. Alternativ kann bei gleicher Rotorbaugröße und gleichem Drall die Spinfrequenz verringert werden. Eine geringere Spinfrequenz erhöht die Lebensdauer der Lager. Sollen Drall und Spinfrequenz beibehalten werden, kann der Kreiselrotor kleiner dimensioniert werden.

Da die Flachspulen des Drehmomenterzeugers an einem außerhalb des Kreiselrotors angeordneten Träger gehaltert sind, ist eine gute Wärmeabfuhr der von den Flachspulen des Drehmomenterzeugers erzeugten Verlustleistung möglich.

Die Flachspulen der Drehmomenterzeuger können in eine Ringscheibe eingegossen sein. Dabei kann die Ringscheibe an einem den Kreiselrotor umgebenden Zylindermantel sitzen, der mit einer Zwischenwand verbunden ist. Über einen solchen Zylindermantel kann die Wärme von den Flachspulen gut abgeleitet werden.

Die Flachspulen der Drehmomenterzeuger können im Bereich des einen Endes des Kreiselrotors und die Abgriffe im axialen Abstand davon im Bereich des anderen Endes des Kreiselrotors angeordnet sein. Dadurch wird die Gefahr einer Beeinflussung der Abgriffe durch die Spulen der Drehmomenterzeuger gegenüber vorbekannten Kreiseln vermindert. Die magnetische Abschirmung der Abgriffe wird verbessert.

Die Flachspulen können in der Nähe des dem Motor abgewandten Ende des Kreiselrotors angeordnet sein. Üblicherweise weist jeder Drehmomenterzeuger ein Paar von diametral gegenüberliegenden Flachspulen auf. Dabei kann jede Windung der Flachspulen einen sich im wesentlichen über einen Quadranten erstreckenden bogenförmigen äußeren Abschnitt und einen sekantialen inneren Abschnitt aufweisen. Der Außendurchmesser der magnetisierten Ringscheiben kann etwa in der Mitte zwischen dem Innendurchmesser und dem Außendurchmesser der die Flachspulen enthaltenden Ringscheibe liegen.

Ein Ausführungsbeispiel der Erfindung ist nachstehend unter Bezugnahme auf die zugehörigen Zeichnungen näher erläutert.

## Kurze Beschreibung der Zeichnungen

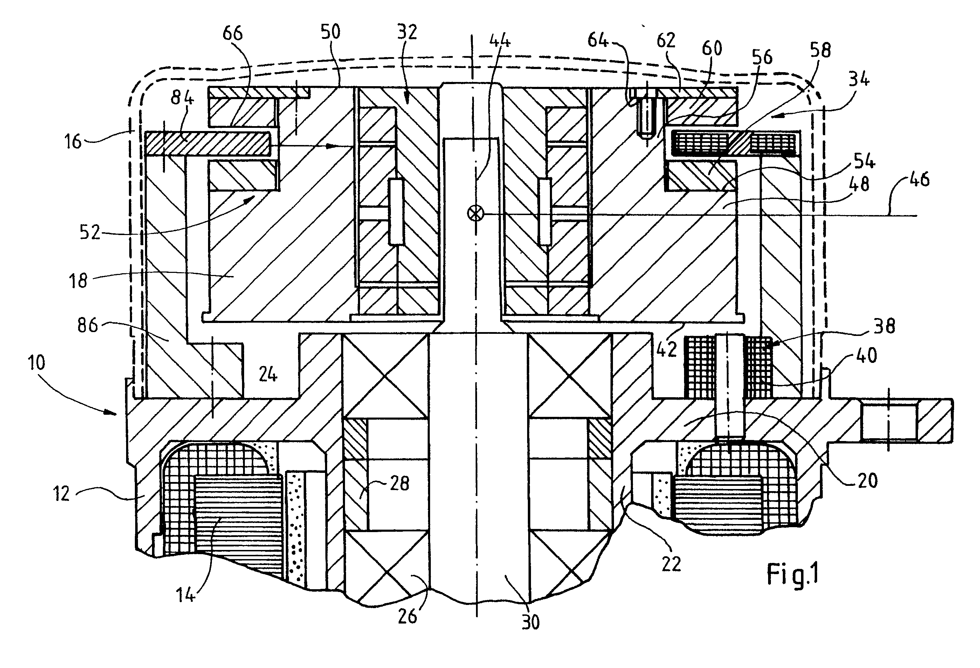

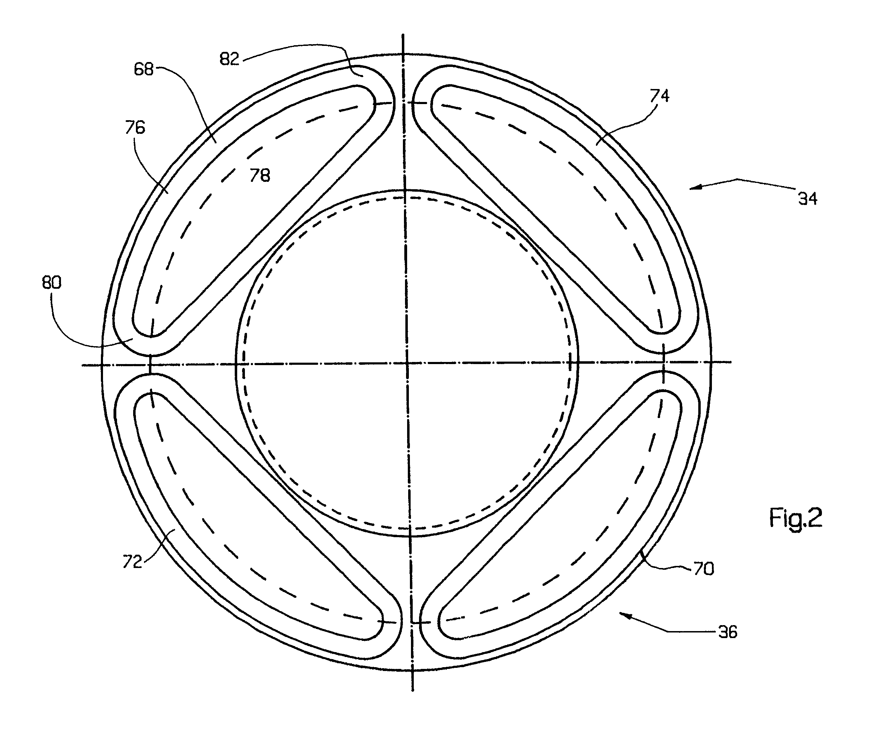

Fig. 1    zeigt einen abgebrochenen Längsschnitt des den Kreiselrotor mit den Abgriffen und den Drehmomenterzeugern enthaltenden Gehäuseteils eines elektrisch gefesselten, dynamisch abgestimmten Kreisels.

Fig .2    zeigt einen Querschnitt der die Flachspulen der Drehmomenterzeuger enthaltenden Ringscheibe, wobei die magnetisierten Ringscheiben der Drehmomenterzeuger ebenfalls angedeutet sind.

## Bevorzugte Ausfuhrung der Erfindung

Ein Kreiselgehäuse 10 enthält einen ersten Gehäuseteil 12 der einen Motor 14 aufnimmt, und einen zweiten Gehäuseteil 16, welcher einen Kreiselrotor 18 umschließt. Zwischen den beiden Gehäuseteilen 12 und 16 erstreckt sich eine Zwischenwand 20. Die Zwischenwand 20 bildet eine zentrale Hülse 22, in welcher Kugellager 24 und 26 sitzen. In den Kugellagern 24 und 26 ist eine Motorwelle 30 des Motors 14 gelagert. Die Motorwelle 30 ragt in den zweiten Gehäuseteil 16 hinein und ist mit dem Kreiselrotor 18 über eine Kardananordnung 32 verbunden. Die Kardananordnung kann nach Art einer der vorgenannten Druckschriften, beispielsweise der DE-C2-32 13 720, aufgebaut sein und ist daher hier nicht im einzelnen beschrieben.

Der Kreisel weist Drehmomenterzeuger 34, 36 und Abgriffe auf, von denen in Fig. 1 nur einer sichtbar und mit 38 bezeichnet ist.

Die Abgriffe 38 weisen diametral gegenüberliegende Induktionsspulen 40 auf, welche dicht vor einer Stirnfläche 42 des Kreiselrotors auf der Zwischenwand 20 angeordnet sind. In Fig. 1 ist eine dieser Spulen 40 zu sehen. Eine zweite Spule des gleichen Abgriffs 38 ist diametral gegenüberliegend angeordnet. Bei einer Auslenkung des Kreiselrotors um eine zur Papierebene von Fig. 1 senkrechte erste Eingangsachse 44, nähert sich die Stirnfläche 42 des Kreiselrotors 18 der einen dieser Induktionsspulen, während sie sich von der gegenüberliegenden Induktionsspule entfernt. Dadurch werden die Induktivitäten der Induktionsspulen gegensinnig verändert. Die Induktionsspulen liegen in einer Signalschaltung, die ein entsprechendes signal des Abgriffes liefert. Solche Signalschaltungen sind allgemein bekannt und daher hier nicht im einzelnen beschrieben. Ein zweiter entsprechender Abgriff mit zwei diametral gegenüberliegenden Induktionsspulen ist in einer zur Papierebene von Fig. 1 senkrechten Ebene angeordnet und spricht auf Auslenkung des Kreiselrotors 18 um eine in der Papierebene von Fig. 1 liegende zweite Eingangsachse 46 an.

Der Kreiselrotor 18 weist einen Drehteil 48 auf. Der Drehteil 48 bildet auf der dem Motor 14 und der Stirnfläche 42 abgewandten Stirnfläche 50 eine Stufe 52. Die Stufe bildet eine Ringschulter 54 und eine daran anschließende Mantelfläche 56. Eine Ringscheibe 58 aus einem axial magnetisierten Werkstoff ist auf der Mantelfläche 56 geführt und liegt auf der Ringschulter 54 auf. Die Ringscheibe 58 ist durch geeignete Mittel, beispielsweise durch Kleben, mit der Ringschulter 54 verbunden. Eine zweite Ringscheibe 60 ähnlich der Ringscheibe 58 besteht ebenfalls aus axial magnetisiertem Material. Die magnetisierte Ringscheibe 60 ist mit einer Ringscheibe 62 verbunden. Die Ringscheibe 62 liegt auf der Stirnfläche 50 des Kreiselrotors 18 auf und ist mit diesem durch Schrauben 64 verbunden. Die Ringscheibe 62 ragt über die Stufe 52. Die magnetisierte Ringscheibe 60 ist ebenfalls auf der Mantelfläche 56 geführt. Zwischen den beiden Ringscheiben 58 und 60 ist ein Luftspalt 66 gebildet. Die Ringscheibe 62 liegt in einer ringförmigen Vertiefung der Stirnfläche 50, so daß die Oberseite der Ringscheibe 62 mit dem Mittelteil der Stirnfläche 50 fluchtet.

Diese magnetisierten Ringscheiben bilden Teile der Drehmomenterzeuger.

Die Drehmomenterzeuger 34 und 36 weisen weiterhin zwei Paare von diametral gegenüberliegenden Flachspulen 68,70 und 72,74 auf. Die Windungen der Flachspulen 68 bis 74 weisen jeweils einen bogenförmigen äußeren Abschnitt 76 auf, der sich über etwa einen Quadranten erstreckt, und einen sekantialen, inneren Abschnitt 78. Diese beiden Abschnitte sind durch Abschnitte 80,82 größerer Krümmung verbunden. Die Flachspulen sind in eine Ringscheibe 84 aus Kunststoff eingegossen. Diese Ringscheibe 84 erstreckt sich mit ihrem inneren Rand in den Luftspalt 66 zwischen den magnetisierten Ringscheiben 58 und 60. Der äußere Rand der Ringscheibe 84 und damit die äußeren Teile der Flachspulen 68,70 und 72,74 liegen außerhalb des Luftspaltes 66. Die Ringscheibe 84 und die magnetisierten Ringscheiben 58 und 60 liegen in axialem Abstand von dem Mittelpunkt der Kardanrahmenanordnung, der mit dem Schnittpunkt der Eingangsachsen 44 und 46 zusammenfällt.

Die Ringscheibe 84 mit den Flachspulen 68 bis 74 sitzt auf einen den Kreiselrotor 18 umgebenden Zylindermantel 86. Der Zylindermantel ist radial außerhalb der Abgriffe mit der Zwischenwand 20 verbunden.

Die beschriebene Anordnung arbeitet wie folgt:

Wenn die beiden gegenüberliegenden Flachspulen, z.B. 68 und 70 eines Drehmomenterzeugers 34 in bekannter und daher hier nicht im einzelnen beschriebener Weise gegensinnig angesteuert werden, dann wird die eine in den Luftspalt 66 zwischen den magnetisierten Ringscheiben und das dort gebildete Magnetfeld hineingezogen, während die andere aus diesem Luftspalt herausgedrückt wird. Da die Ringscheibe 84 mit den Flachspulen 68 und 70 gehäusefest ist, wirkt ein Reaktionsmoment auf den Kreiselrotor.

Die Flachspulen sind in maximalem axialen Abstand von den Induktionsspulen der Abgriffe. Daher ist die direkte magnetische Beeinflussung der Abgriffe durch die Flachspulen gering.

**Patentansprüche**

1. Dynamisch abgestimmter Kreisel, enthaltend
   (a) einen Antriebsmotor (14) mit einer Motorwelle (30), die in einem Kreiselgehäuse (10) gelagert ist (b) einen Kreiselrotor (18),
   (c) eine mit Federgelenken ausgebildete Kardananordnung (32) zur Kopplung des Kreiselrotors (18) mit der Motorwelle (30), wobei diese Kardananordnung (32) einen Kardanring enthält, dessen dynamische Momente die Rückstellmomente der Federgelenke kompensieren,
   (d) Abgriffe (38), welche auf Auslenkungen des Kreiselrotors (18) um eine erste bzw. eine zweite Eingangsachse (44,46) ansprechen, wobei diese Eingangsachsen (44,46) senkrecht zueinander und zu der Achse der Motorwelle (30) verlaufen,
   (e) Drehmomenterzeuger (34,36), welche um die Eingangsachsen (44,46) wirksam sind,

   **dadurch gekennzeichnet, daß**

   (f) die Drehmomenterzeuger (34,36) zwei an dem Kreiselrotor (18) angebrachte, radial sich erstreckende, Ringscheiben (58,60) aufweisen,
   (g) die Ringscheiben (58,60) axial magnetisiert sind,
   (h) die Ringscheiben (58,60) zwischen sich einen Luftspalt (66) bilden, und
   (i) die Drehmomenterzeuger (34,36) weiterhin Flachspulen (68,70;72,74) enthalten, die radial angeordnet sind und sich teilweise in den Luftspalt (66) erstrecken.

2. Dynamisch abgestimmter Kreisel nach Anspruch 1, **dadurch gekennzeichnet, daß** die Flachspulen (68,70;72,74) der Drehmomenterzeuger (34,36) in eine Ringscheibe (84) eingegossen sind.

3. Dynamisch abgestimmter Kreisel nach Anspruch 2, **dadurch gekennzeichnet, daß** die Ringscheibe (84) an einem den Kreiselrotor (18) umgebenden Zylindermantel (86) sitzt, der mit einer Zwischenwand (20) des Kreiselgehäuses (10) verbunden ist.

4. Dynamisch abgestimmter Kreisel nach einem der Ansprüche 1 bis 3, **dadurch gekennzeichnet, daß** die Flachspulen (68,70;72,74) der Drehmomenterzeuger (34,36) im Bereich des einen Endes des Kreiselrotors (18) und die Abgriffe (38) im axialen Abstand davon im Bereich des anderen Endes des Kreiselrotors (18) angeordnet sind.

5. Dynamisch abgestimmter Kreisel nach Anspruch 4, **dadurch gekennzeichnet, daß** die Flachspulen (68,70;72,74) in der Nähe des dem Motor (14) abgewandten Ende des Kreiselrotors (18) angeordnet sind.

6. Dynamisch abgestimmter Kreisel nach Anspruch 5, **dadurch gekennzeichnet, daß**

(a) der Kreiselrotor (18) ein Drehteil (48) aufweist, das an seinem dem Motor (14) abgewandten Ende längs des Umfanges eine Stufe (52) bildet,

(b) eine erste axial magnetisierte Ringscheibe (58) auf die von dieser Stufe (52) gebildete Ringschulter (54) aufgesetzt ist, und

(c) eine zweite axial magnetisierte Ringscheibe (60) an einer Tragscheibe (62) angebracht ist, die an der Stirnfläche (50) des Drehteils (48) befestigt ist und über die Stufe (52) hinwegragt, wobei die zweite magnetisierte Ringscheibe (60) auf der Mantelfläche (56) der Stufe (52) geführt ist und zwischen den Ringscheiben (58,60) der Luftspalt (66) der Drehmomenterzeuger (34,36) gebildet wird.

7. Dynamisch abgestimmter Kreisel nach einem der Ansprüche 1 bis 6, **dadurch gekennzeichnet, daß** jeder Drehmomenterzeuger (34,36) ein Paar von diametral gegenüberliegenden Flachspulen (68,70;72,74) aufweist.

8. Dynamisch abgestimmter Kreisel nach Anspruch 7, **dadurch gekennzeichnet, daß** jede Windung der Flachspulen (68,70;72,74) einen sich im wesentlichen über einen Quadranten erstreckenden bogenförmigen äußeren Abschnitt (76) und einen sekantialen inneren Abschnitt (78) aufweist.

9. Dynamisch abgestimmter Kreisel nach den Ansprüchen 2 und 8, **dadurch gekennzeichnet, daß** der Außendurchmesser der magnetisierten Ringscheiben (58,60) etwa in der Mitte zwischen dem Innendurchmesser und dem Außendurchmesser der die Flachspulen (68,70;72,74) enthaltenden Ringscheibe (84) liegt.

Fig.1

EP 0 444 445 A1

Fig.2

EP 0 444 445 A1

# EUROPÄISCHER RECHERCHENBERICHT

Nummer der Anmeldung

**EP 91 10 1595**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 336 795 (SAGEM)<br>* Figuren 6,7; Seite 5, Zeilen 46-55 * | 1 | G 01 C 19/30 |
| A | | 2,3 | |
| | – – – | | |
| A | EP-A-0 146 850 (BODENSEEWERK)<br>* Figur 1; Zusammenfassung * | 1 | |
| | – – – | | |
| A | US-A-4 189 948 (BUCKLEY)<br>* Figur 4; Zusammenfassung * | 1 | |
| | – – – – – | | |

| RECHERCHIERTE SACHGEBIETE (Int. Cl.5) |
|---|
| G 01 C |

Der vorliegende Recherchenbericht wurde für alle Patentansprüche erstellt

| Recherchenort | Abschlußdatum der Recherche | Prüfer |
|---|---|---|
| Den Haag | 28 Mai 91 | KOLBE W.H. |